# EUROPÄISCHE PATENTSCHRIFT

(11) **EP 0 998 407 B1**
(45) Veröffentlichungstag und Bekanntmachung des Hinweises auf die Patenterteilung: **02.10.2002**
(21) Anmeldenummer: 98945016.8
(22) Anmeldetag: 21.07.1998
(51) Int. Cl.: B63H 23/24, H02K 9/10, H02K 9/19, H02K 5/02

(54) **ELEKTROMOTORISCHER GONDEL-SCHIFFSANTRIEB MIT KÜHLEINRICHTUNG**
ELECTRIC MOTOR POD DRIVE SYSTEM FOR A VESSEL WITH A COOLING DEVICE
SYSTEME D'ENTRAINEMENT EN NACELLE PAR MOTEUR ELECTRIQUE POUR NAVIRE AVEC DISPOSITIF DE REFROIDISSEMENT

(30) Priorität: 21.07.1997 DE 19731816; 16.01.1998 DE 19801448
(43) Veröffentlichungstag der Anmeldung: 10.05.2000
(73) Patentinhaber: SIEMENS AKTIENGESELLSCHAFT, 80333 München (DE); Schottel GmbH & Co. KG, 56322 Spay (DE)
(72) Erfinder: RZADKI, Wolfgang, D-21509 Glinde (DE); HARTIG, Rainer, D-22089 Hamburg (DE); BRABECK, Stephan, D-56154 Boppard (DE); HEER, Manfred, D-56751 Düngenheim (DE); REUTER, Reinhold, D-56281 Schwall (DE); SCHÜRING, Ingo, D-10715 Berlin (DE); HEIN, Peter, D-13629 Berlin (DE); MEYER, Christian, D 13591 Berlin (DE)
(74) Vertreter: Berg, Peter
(86) Internationale Anmeldenummer: DE9802049
(87) Internationale Veröffentlichungsnummer: WO99005023

(56) Entgegenhaltungen:
- EP-A- 0 581 966
- WO-A-97/09771
- DE-A- 1 638 276
- DE-C- 683 970
- US-A- 3 936 681
- US-A- 4 445 046
- US-A- 5 101 128
- US-A- 5 403 216
- ANDERSEN PETER; GRAGEN UWE: "New Type of Permanent Field Machines for Diesel Electric Propulsion (A.3.4.)" AES 97 - CIVIL OR MILITARY ALL ELECTRIC SHIP - INT'L SYMPOSIUM AND EXHIBITION (SEE), 13. - 14. März 1997, XP002087162 Paris FR in der Anmeldung erwähnt
- GLOEL J ET AL: "EIN NEUES HOCHEFFIZIENTES ANTRIEBSSYSTEM" SCHIFF UND HAFEN, Bd. 49, Nr. 10, Oktober 1997, Seiten 40-42, 44, XP000720093

## Beschreibung

Die Erfindung betrifft einen elektrischen Gondelantrieb für ein Schiff, der einen, in eine wasserumströmte, strömungsgünstig gestaltete, Antriebsgondel eingepaßten Elektromotor aufweist, wobei die Antriebsgondel über einen hohlen Schaft an der Unterseite des Schiffes angeordnet ist und wobei von dem Elektromotor erzeugte Wärme konstruktiv erreicht zu einem sehr großen Teil über die Oberfläche der Antriebsgondel sowie physikalisch bedingt zu einem kleinen Teil über die Oberfläche des an die Antriebsgondel angrenzenden Schaftteils an das umströmende Wasser abgegeben wird.

Ein dem vorstehenden entsprechender elektrischer Gondelantrieb für ein Schiff ist aus der Druckschrift der Anmelder, Titel: Siemens-Schottel-Propulsor (SSP) "The Podded Electric Drive with Permanently Excited Motor", vorgelegt zur AES 97 - All Electric Ship 13.-14.03.97, Paris zu entnehmen. Diese Schrift über den Siemens-Schottel-Propulsor (SSP) zeigt einen elektrischen Gondelantrieb für ein Schiff mit einem einfach oberflächengekühlten Motor in Form eines permanenterregten Synchronmotors. Dieser Motor, dessen nähere Einzelheiten aus FIG 2 der Druckschrift zu entnehmen sind, ist vollständig gekapselt und wartungsfrei. Die erzeugte Wärme wird wie obenstehend beschrieben an das den Antrieb umströmende Wasser abgegeben. Dabei trägt der auf Grund der auftretenden Temperaturdifferenz zwischen Motorgehäuse und Schaft entstehende Wärmestrom zur Kühlung des Motorgehäuses bei.

Es ist Aufgabe der Erfindung, eine Lösung anzugeben, die eine sichere Kühlung des Motors auch bei einem Einsatz des elektrischen Gondelantriebs in tropischen Gewässern mit hohen Wassertemperaturen bei Überlast ermöglicht. Darüber hinaus soll die Arbeitstemperatur des elektrischen Motors abgesenkt und eine Vergleichsmäßigung der Temperatur der einzelnen Komponenten des Motors, z.B der Wickelköpfe, erreicht werden.

Die Aufgabe wird im Prinzip dadurch gelöst, daß die über die Oberfläche der Gondel und des an die Antriebsgondel angrenzenden Schaftteils abgebene Wärmemenge durch Mittel zur Verbesserung der Wärmeleitung und -abgabe sowie eine Vergrößerung der wirksamen Wärmeabgabefläche und eine konstruktiv erreichte Erhöhung der Temperatur der wirksamen Wärmeabgabefläche vergrößert wird.

Es ist dabei vorgesehen, daß Mittel zur Verbesserung der Wärmeleitung und -abgabe verwendet werden und dass eine Vergrößerung der wirksamen Wärmeabgabefläche vorgenommen wird. Bei dem aus der Stand der Technik bekannten elektrischen Gondelantrieb ist als wirksame Wärmeabgabefläche nur die Außenwand der Antriebsgondel im Wicklungsbereich des Elektromotors vorgesehen. Hier findet eine direkte Wärmeabgabe von dem eingeschrumpften Innenteil an die Außenwand statt. Durch die erfindungsgemäße Maßnahme wird diese wirksame Wärmeabgabefläche erheblich vergrößert und die Temperatur der Wärmeabgabeflächen angehoben. Ein vorteilhaft besseres thermisches Verhalten des Gondelantriebs ist die Folge.

Durch eine Erhöhung der Temperatur der wirksamen Wärmeabgabefläche wird vorteilhaft die Temperaturdifferenz zu dem umgebenden Seewasser erhöht und auch bei einem Einsatz des Antriebs in tropischen Gewässern mit Wassertemperaturen von 30°C bis 35°C ist eine zufriedenstellende Kühlung des Antriebs gewährleistet. Dies ist insbesondere für Kreuzfahrtschiffe wesentlich, die z.B. das Rote Meer durchfahren.

Zur Verbesserung der Wärmeleitung, insbesondere zur Verbesserung der Wärmeleitung aus dem Wicklungsbereich des Elektromotors heraus ist vorgesehen, daß ein Material höherer Wärmeleitfähigkeit als Stahl verwendet wird. Hierfür ist ein Material aus eine gut wärmeleitenden Nichteisenmetall(NE)-Legierung besonders vorteilhaft. Insbesondere kupferhaltige NE-Legierungen weisen eine höhere Wärmeleitfähigkeit als Stahl auf. Bei der Verwendung spezieller Kupferbronzen ergibt sich dabei noch der wesentliche Vorteil, daß kein Oberflächenbewuchs erfolgt. So kann auf den Einsatz einer Antifouling-Farbe auf der Oberfläche der Gondel und des Gondel-Schaftübergangs verzichtet werden. Dieser Verzicht auf einen Anstrich führt zu einer nicht unerheblichen Erhöhung der Oberflächentemperatur der Wärmeabgabefläche, da Antifouling-Anstriche eine um mehr als eine Zehnerpotenz niedrigere Wärmeleitfähigkeit als Metalle haben. Sie wirken also als Isolationsschicht und verschlechtern die Wärmeabgabe entsprechend. Durch die Verwendung einer speziellen Kupferbronze, hier empfiehlt sich die sogenannte Propellerbronze G-CU Al 10 Ni, wird also ein unerwarteter Vorteil erhalten; es wird nicht nur die Wärmeleitung verbessert, da derartige Werkstoffe gegenüber Stahl bessere Wärmeleiter sind, sondern es wird auch eine erheblich erhöhte Wärmeabgabetemperatur erreicht.

Bei dem elektrischen Gondelantrieb ist weiterhin vorgesehen, daß die Antriebsgondel in dem in den Schaft hineinweisenden Teil eine, gegenüber der im strömungsgünstig ausgestalteten Teil vorhandenen Wandstärke, verringerte Wandstärke aufweist. So ergibt sich vorteilhaft eine besonders gute Wärmeabgabe von dem nicht direkt vom Seewasser gekühlten Teil der Gondeloberfläche in den Schaft hinein. Die Wandstärke kann in dem in den Schaft hineinweisenden Teil der Antriebsgondel soweit verringert werden, wie es die Gießtechnik zuläßt. So ergibt sich in diesem Bereich eine wesentlich höhere Oberflächentemperatur als in dem übrigen Mittelbereich der Motorgondel, der strömungsgünstig ausgestaltet werden muß und daher in der Mitte eine relativ große Wandstärke aufweist.

Es ist weiterhin vorgesehen, daß die Antriebsgondel auf dem in den Schaft hineinweisenden Teil eine vergrößerte Oberläche aufweist, z.B. eine durch Rippen, Sicken oder Wabenbleche vergrößerte Oberfläche. Hierdurch wird vorteilhaft erreicht, daß die wärmeabgebende Oberfläche wesentlich vergrößert wird, so daß in diesem Bereich eine erhöhte Wärmeabgabe stattfinden kann. Die abgegebene Wärme wird konvektiv durch die in dem hohlen Schaft befindliche Luft verteilt und gelangt so über die große Oberfläche des Schafts in das Seewasser.

In Ausgestaltung der Erfindung ist vorgesehen, daß Komponenten der vergrößerten Oberfläche Wärmeleiteinrichtungen (Heat Ducts) aufweisen, die mit dem Inneren des Elektromotors in Verbindung stehen. So kann die Oberflächentemperatur der vergrößerten Oberfläche gesteigert und damit die Wärmeabgabe an die im Inneren des Schaftes zirkulierende Luft noch weiter erhöht werden. Dabei wird das erfindungsgemäße Prinzip der einfachen Kühlung nicht verlassen.

Zusätzlich oder alternativ kann der Schaft ein Unterteil aufweisen, das zumindest teilweise doppelwandig ausgebildet ist, wobei das Innere des doppelwandigen Teils Wärmeleitmittel wie Luft oder Wasser aufweist. In dem Schaft werden ggf. auch Einrichtungen zur Umwälzung der Schaftluft z.B. Ventilatoren angeordnet, die zur Aufrechterhaltung einer stabilen Zirkulation verwendet werden. So kann die von der Gondel in den Schaft abgegebene Wärme gut an die Schaftwand heran und an dieser entlanggeführt und durch diese gut an das Seewasser abgegeben werden.

Die vorstehenden Einrichtungen befinden sich vorteilhaft nur im unteren Teil des Schaftes, der immer von Seewasser umspült ist. Der Übergang Schaft-Schiff befindet sich oberhalb der Wasserlinie und dies bedeutet, daß der obere Teil des Schaftes nur teilweise von Seewasser umspült wird. Durch die Anordnung der Einrichtungen zur Erhöhung der Wärmeabfuhr im unteren Teil des Schaftes wird eine sichere Wärmeabfuhr erreicht. Falls, wie ebenfalls vorgesehen, der Gondelantrieb an einem kurzen Schaft, der unterhalb der Wasserlinie in das Schiff übergeht, angeordnet ist, befinden sich die entsprechenden Einrichtungen natürlich in dem gesamten Schaft. Da eine Anordnung des Übergangs Schaft-Schiff in der Wasserlinie prinzipiell nicht vorgesehen ist, kommen nur diese beiden Alternativen für die Anordnung der Wärmeabgabekomponenten im Schacht in Frage.

Ergänzend oder ebenfalls alternativ ist vorgesehen, daß die Antriebsgondel Einrichtungen aufweist, die Wärmeübertragungsmittel enthalten (Heat Ducts), hierdurch kann die Wärme vorteilhaft direkt abgeleitet werden, so daß sich eine besonders gut wirkende, kostengünstige und einfache Lösung ergibt. Es ist weiterhin in Verfolgung dieses Prinzips vorgesehen, daß der Elektromotor eine beidseitig offene Hohlwelle aufweist, die von Seewasser durchströmbar und gegebenenfalls konisch ausgebildet ist. So erfolgt eine Kühlung des Elektromotors auch von Innen.

In anderer Ausführung ist vorgesehen, daß in der Welle des Elektromotors ein konvektiver Kühlkreislauf angeordnet ist, der Wärme von der Mitte des Elektromotors zu den kühlen Enden transportiert. So kann vorteilhaft auch die Fläche der Naben und sogar ein Teil der Propelleroberfläche zur Ableitung der Wärme genützt werden.

Es ist weiterhin vorgesehen, daß die Wickelköpfe des Elektromotors konvektiv arbeitende Heat Ducts zu den kühlen Außenenden, zu Seitenflossen oder in das untere Schaftteil hinein aufweisen. Die Wickelköpfe stehen nicht in direktem Kontakt mit der Außenwand der Antriebsgondel, entwickeln jedoch wegen der in ihnen fließenden Ströme eine erhebliche Wärme. In einigen Fällen ist daher eine zusätzliche Kühlung der Wickelköpfe erforderlich, dies kann besonders einfach mit den vorstehend beschriebenen Heat Ducts erfolgen. Dabei wird die Oberfläche der kühlen Außenenden, der Seitenflossen oder des unteren Schaftteils besonders günstig ausgenutzt.

Zur direkten Ableitung der von den Wickelköpfen entwickelten Wärme werden diese vorteilhaft auch mit Wärmebrücken zur Außenwand der Antriebsgondel versehen. Für kleinere Antriebe können dann sogar Heat Ducts und weitere Kühlungskomponenten entfallen. Dann reicht die Außenwandkühlung des Gondelantriebs aus.

Diese Wärmeableitungsbrücken bestehen vorteilhaft aus wärmeleitendem Kunststoff mit Füllmaterial aus besonders gut wärmeleitendem Material. Als Kunststoff kommt z.B. Epoxyd-Harz in Frage, während als Füllmaterial Mineralien verwendet werden können. Die Wärmeableitungsbrücken können dabei größer sein als die Wickelkopfabmessungen und z.B. als Wärmeableitungsringe, die vorteilhaft Trennfugen zwischen den einzelnen Wickelkopfabschnitten aufweisen, ausgebildet sein. So ergibt sich eine besonders großvolumige Ausführung der Wärmeableitungsbrücken mit einer guten Wärmeableitung aus den Wickelköpfen zur Außenwand der Antriebsgondel.

Es ist weiterhin vorgesehen, daß die Antriebsgondel und/oder das untere Schaftteil zur Verbesserung der Kühlung Oberflächenvergrößerungselemente, z.B. Außenrippen oder -Sicken aufweisen. Hierdurch wird ebenfalls eine verbesserte Wärmeabfuhr aus dem Motor in das Seewasser erreicht, wobei besonders vorteilhaft diese Außenrippen oder -Sicken auch Strömungsleitfunktionen übernehmen können, die die Wirkung von Flossen unterstützen.

Am Übergang vom Schaft zur Antriebsgondel sind gegebenenfalls wasserdurchströmte gegen Verstopfungen durch Treibgut konisch ausgebildete Kühlkanäle vorgesehen, so ergibt sich für diesen Bereich eine besonders gute Kühlung. An den Kühlkanälen können vorteilhaft Heat Ducts enden, die aus dem Inneren des Antriebsmotors herausgeführt sind.

Es ist weiterhin vorgesehen, daß gegebenfalls der Motoraußenbereich und/oder der Motor-Schaft-Übergangsbereich zumindest teilweise doppelwandig ausgeführt sind, wobei der Raum zwischen den beiden Wänden von einem Kühlmittel, insbesondere Wasser, durchströmbar ausgebildet ist. In derartigen doppelwandigen Räumen ergibt sich durch die einseitig zugeführte Wärme eine Zirkulation, so daß diese Doppelwandbereiche als gute Wärmeabgabebereiche benutzt werden können. Darüber hinaus haben sie den Vorteil, daß sie z.B. den Unterteil des Schaftes verstärken können oder daß sie zur Ausbildung einer besonders strömungsgünstigen Form beitragen können. Hier läßt sich also eine Kombinationswirkung erreichen.

Die Wärmeleiteinrichtungen werden vorteilhaft ebenso wie der Elektromotor wartungsfrei ausgebildet. Da sie ohne Umwälzpumpen arbeiten, ist dies ohne weiteres möglich. Sie können daher als mit dem Gondelantriebsmotor einen Block bildende Einheit ausgebildet sein, die im Fahrbetrieb nicht für Wartung oder gar für Reparaturen vorgesehen ist. Da sich die Wärmeleit- und Abgabeeinrichtungen vollständig im unteren Teil des Schafts befinden, stören sie die Demontage des unteren Schaftteils nicht, die durch Taucher erfolgt, wenn der Gondelantrieb zur Reparatur bei im Wasser bleibenden Schiff ausgewechsel wird. Gegenüber den bekannten Wärmetauscherlösungen mit Wärmetauschern im Schiff oder an Deck ergeben sich also erhebliche Handhabungs- und Kostenvorteile.

Die Erfindung wird anhand von Darstellungen näher erläutert, die bevorzugte Ausführungsbeispiele zeigen und aus denen, ebenso wie aus den Unteransprüchen und der Beschreibung, weitere erfinderische Einzelheiten entnehmbar sind.

Im einzelnen zeigen:
- FIG 1: einen Gondelantrieb entsprechend dem Stand der Technik (Veröffentlichung AES 97),
- FIG 2: einen erfindungsgemäß gekühlten Gondelantrieb in schematischer Schnittdarstellung,
- FIG 3: eine Kühlflächenanordnung gemäß FIG 2 in schematischer Darstellung,
- FIG 4: wasserdurchströmte Kühlkanäle am Übergang Antriebsgondel-Schaft,
- FIG 5: die Anordnung einer inneren Doppelwand im Schaftunterteil und
- FIG 6: einen detaillierten Schnitt durch eine Seite der Antriebsgondel mit Wärmebrücken im Bereich der Wickelköpfe.

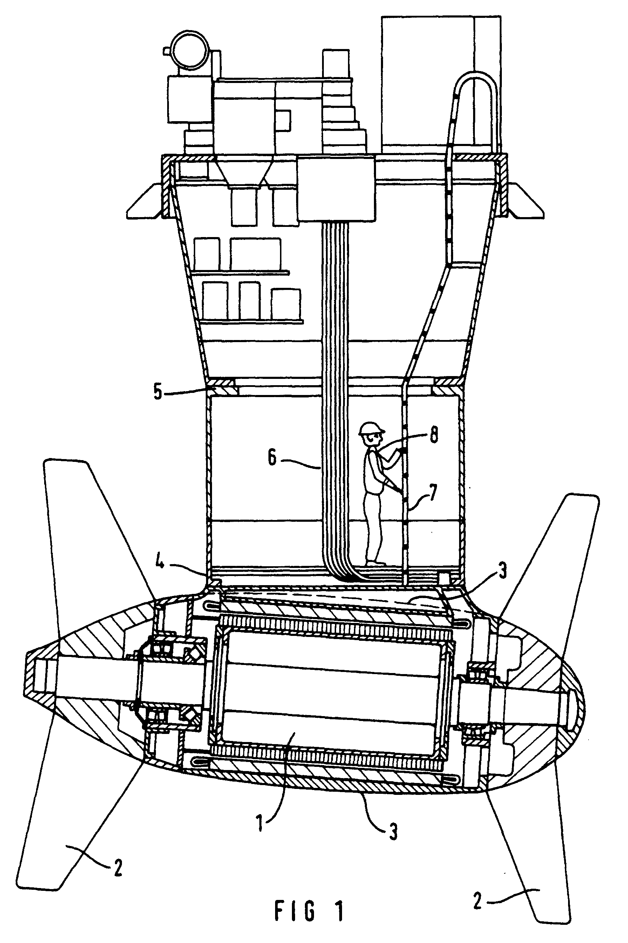

In FIG 1, die den Stand der Technik zeigt von dem die Erfindung ausgeht, bezeichnet 1 den elektrischen Antriebsmotor. 2 bezeichnet die von dem Antriebsmotor 1 angetriebenen Propeller. 3 bezeichnet die Gondelaußenwand, deren Kontur auch in dem in den Schaft hineinweisenden Teil beibehalten wurde. 4 bezeichnet den Flanschübergang zwischen dem Gondelantrieb und dem Unterteil des Schaftes und 5 einen Flansch in der Mitte des Schaftes. Durch den Schaft hindurch zieht sich nach unten der Kabelstrang 6 zur Stromversorgung des elektrischen Motors 1. In dem Schaft selbst ist eine Leiter 7 angeordnet, mit dem ein Inspekteur 8 leichten Zugang zu dem unteren Teil des Schaftes erhält. Da der Gondelantrieb wartungsfrei und nicht zugänglich ausgebildet ist, obliegt dem Inspekteur 8 lediglich die Überwachung der Flanschverbindungen 4 und 5. Da diese auf eine große Lebensdauer ausgelegt sind, entfällt bei neueren Ausführungen, also auch bei der erfindungsgemäßen Ausführung, der untere Teil der Leiter 7. Der untere Teil des Schaftes ist also frei für Einbauten; auch für Einbauten, die einen Zugang zur Außenwand des elektrischen Motors unmöglich machen.

Im oberen Teil des Schaftes sind nicht näher bezeichnete Hilfseinrichtungen angebracht, z.B. Bilgenpumpen, die Druckluftversorgung der Dichtung am Übergang vom Schaft zum Schiff etc..

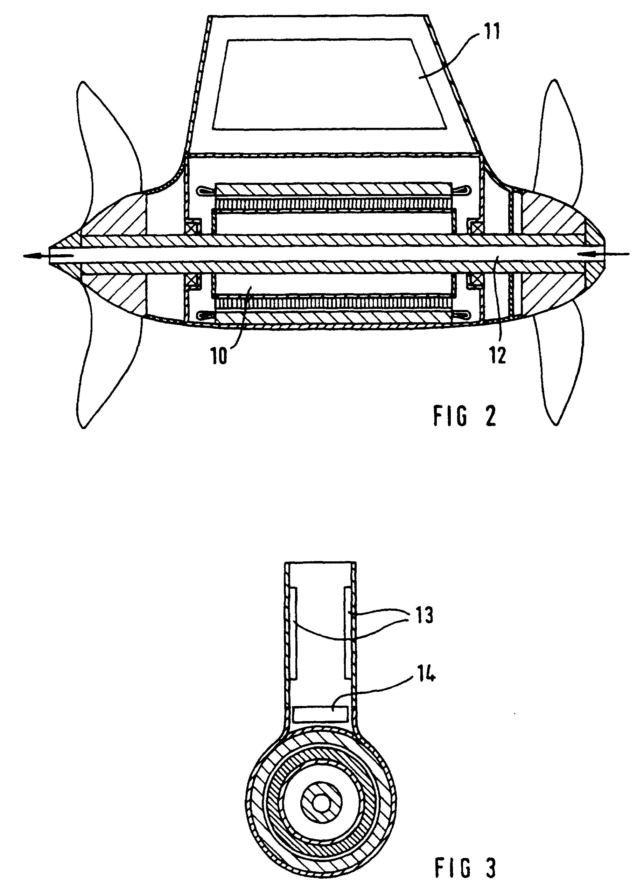

FIG 2 zeigt eine schematische Darstellung einer Antriebsgondel mit dem elektrischen Motor 10, der über nicht dargestellte Heat Ducts mit einem oder mehreren Kühlelementen 11 im Schaftunterteil, insbesondere an den Wänden des Schaftunterteils, verbunden ist. Zur weiteren Kühlung besitzt der gezeigte Gondelantrieb eine hohle Welle, die von Wasser durchströmt wird. Der Strömungskanal in der Hohlwelle ist mit 12 bezeichnet und die Pfeile geben die Durchströmungsrichtung des Wassers an. Die nicht gezeigten Heat Ducts sind ebenso wie der Strömungskanal vorteilhaft einbaulos ausgebildet.

In FIG 3 werden, ebenfalls schematisch, im Unterteil des Schaftes angeordnete Kühlelemente 13 und 14 gezeigt. Ebenso wie bei der in FIG 2 schematisch gezeigten Ausführung eines Kühlelements können hier alle aus der Kühltechnik bekannten Kühlelemente eingesetzt werden. Die Anordnung der Kühlelemente ist beliebig, auch zusätzliche Kühlelemente im freien Raum des hohlen Schafts sind möglich. Der elektrische Motor braucht ja nicht zugänglich zu sein.

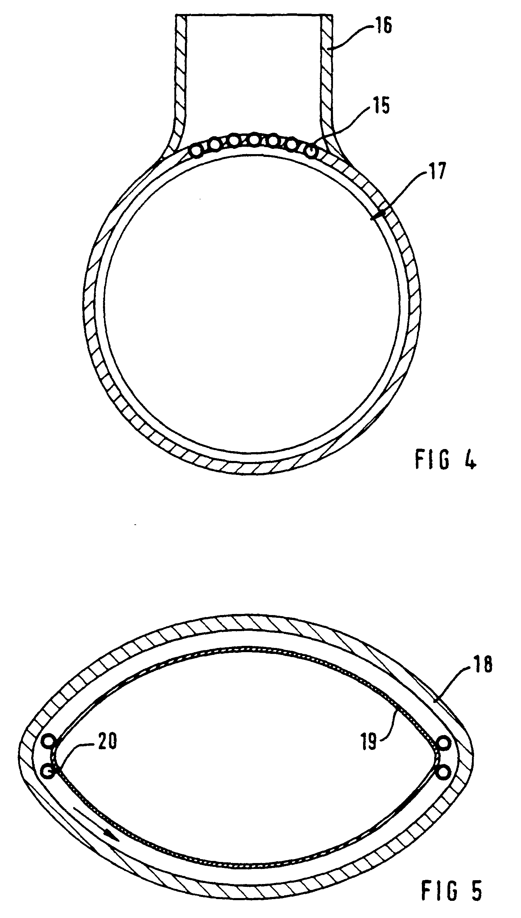

In FIG 4 sind Kühlmittelrohre 15 am Übergang des Schaftes 16 zum Gondelantrieb 17 gezeigt. Sie werden ebenso wie die in FIG 2 gezeigte Hohlwelle längsdurchströmt. Auch die Außenseiten der Kühlmittelrohre 15 können über Heat Ducts mit dem Inneren des Antriebsmotors in Verbindung stehen. Die Kühlmittelrohre 15 können aber auch einer besonders intensiven Kühlung des ihnen zugewandten Teils der Gondelaußenwand dienen.

FIG 5 zeigt eine doppelwandige Ausführung des unteren Teils des Schaftes mit der Außenwand 18 und einer eingesetzten Innenwand 19, wobei in den Zwischenraum zwischen der Außenwand 18 und dem inneren Teil 19 Heat Ducts 20 einmünden, die hier in einer Ausführung für die Durchströmung mit Wasser ausgebildet sind. Der Strömungsquerschnitt für das Kühlmittel ist im Fall der Verwendung von Wasser vorzugsweie rund, falls Heat Ducts für Luft verwendet werden, werden vorzugsweise Einströmungsschlitze vorgesehen.

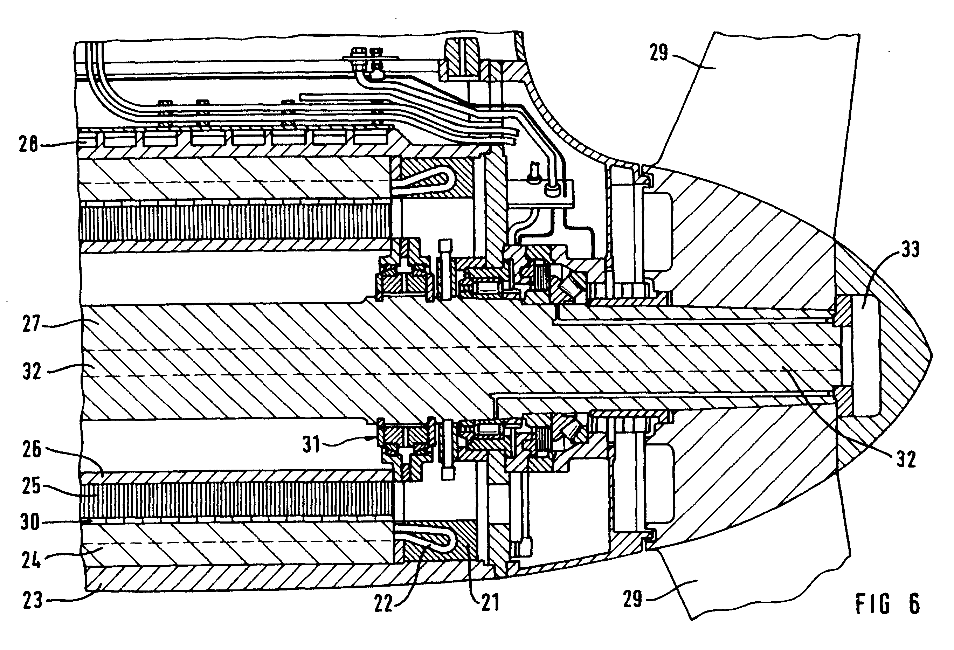

In FIG 6, die einen detaillierten Schnitt durch ein Ende des Antriebsgondelkörpers zeigt, bezeichnet 21 eine Wärmebrücke für die Wickelköpfe 22 der Ständerwicklungen 24. Die Ständerwicklungen 24 befinden sich mittig in dem eigentlichen Gondelkörper 23, der bevorzugt aus dem gleichen Material wie die Propeller 29, d.h. aus Propellerbronze, ausgeführt ist. Zwischen Läufer- 25 und Ständerwicklung 24 befindet sich der Luftspalt 30. Der Läufer 25 ist auf einem Innenrohr 26 angeordnet, das wiederum auf der Welle 27 befestigt ist. Die Befestigung erfolgt über eine Kupplung 31. Schaftseitig weist das Gondelgehäuse 23 noch Kühlkammern 28 auf, die als Ausgang für Heat Ducts in den Schaft dienen können. Dann kann hier auf eine Oberflächenvergrößerung durch Rippen o.ä. verzichtet werden. Die Kupplung, die Wellenlagerung etc. gehören nicht zur Erfindung und sind daher nicht weiter ausgeführt.

In der Nabe befindet sich noch ein Hohlraum 33, der gegebenenfalls durch eine strichliert gezeichnete große Mittelbohrung 32 in der Welle 27 mit dem wärmebaufschlagten Mittelteil des Gondelantriebs in Verbindung steht. So ist eine wärmetechnisch gute Ausnutzung der kühlen Enden des Gondelantriebs möglich.

Die erfindungsgemäßen Kühlelemente nach der Erfindung lassen eine Vielzahl von Kühlkombinationen zu. Die einzelnen Maßnahmen werden je nach Fahrtgebiet des Schiffes und der Motorgröße ausgewählt. Gemeinsam ist ihnen der Verzicht auf lange Kühlmittelwege und auf Kühlmittelumwälz-Aggregate. So ergibt sich eine erhebliche Verbesserung auch gegenüber dem in der US-PS 5 403 216 und der US-PS 2 714 866 gezeigten Stand der Technik.

## Patentansprüche

1. Elektrischer Gondelantrieb für ein Schiff, der einen, in eine wasserumströmte, strömungsgünstig gestaltete, Antriebsgondel eingepaßten Elektromotor aufweist, wobei die Antriebsgondel über einen hohlen Schaft an der Unterseite des Schiffes angeordnet ist und wobei die von dem Elektromotor erzeugte Wärme konstruktiv erreicht zu einem sehr großen Teil über die Oberfläche der Antriebsgondel sowie physikalisch bedingt zu einem kleinen Teil über die Oberfläche des an die Antriebsgondel angrenzenden Schaftteils an das umströmende Wasser abgegeben wird, **dadurch gekennzeichnet, daß** die über die Oberfläche der Gondel und des an die Antriebsgondel angrenzenden Schaftteils abgebene Wärmemenge durch Mittel zur Verbesserung der Wärmeleitung und -abgabe sowie eine Vergrößerung der wirksamen Wärmeabgabefläche und eine konstruktiv erreichte Erhöhung der Temperatur der wirksamen Wärmeabgabefläche vergrößert wird.

2. Elektrischer Gondelantrieb nach Anspruch 1, **dadurch gekennzeichnet, daß** ein Mittel zur Verbesserung der Wärmeleitung ein Material höherer Wärmeleitfähigkeit als Stahl ist.

3. Elektrischer Gondelantrieb nach Anspruch 2, **dadurch gekennzeichnet, daß** zumindest das Material der Antriebsgondel (17,23) aus einer Nichteisenmetall(NE)-Legierung besteht.

4. Elektrischer Gondelantrieb nach Anspruch 2 oder 3, **dadurch gekennzeichnet, daß** das Material eine Bronze-Legierung, insbesondere der Qualität G-Cu Al 10 Ni, ist.

5. Elektrischer Gondelantrieb nach einem oder mehreren der vorhergehenden Ansprüche, **dadurch gekennzeichnet, daß** die Antriebsgondel (17,23) eine metallisch blanke Oberfläche aufweist.

6. Elektrischer Gondelantrieb nach einem oder mehreren der vorhergehenden Ansprüche, **dadurch gekennzeichnet, daß** die Antriebsgondel (17,23) in dem in den Schaft (16,18) hineinweisenden Teil eine, gegenüber der im strömungsgünstig ausgestalteten Teil vorhandenen Wandstärke, verringerte Wandstärke aufweist.

7. Elektrischer Gondelantrieb nach einem oder mehreren der vorhergehenden Ansprüche, **dadurch gekennzeichnet, daß** die Antriebsgondel (17,23) auf dem in den Schaft (16,18) hineinweisenden Teil eine vergrößerte Oberfläche aufweist, z.B. eine durch Rippen, Sicken oder Wabenbleche vergrößerte Oberfläche.

8. Elektrischer Gondelantrieb nach einem oder mehreren der vorhergehenden Ansprüche, **dadurch gekennzeichnet, daß** Komponenten der vergrößerten Oberfläche Wärmeleiteinrichtungen (Heat Ducts) aufweisen, die mit dem Inneren des Elek tromotors (10) in Verbindung stehen.

9. Elektrischer Gondelantrieb nach einem oder mehreren der vorhergehenden Ansprüche, **dadurch gekennzeichnet, daß** der Schaft (16,18) ein Unterteil aufweist, das zumindest teilweise doppelwandig ausgebildet ist, wobei das Innere des doppelwandigen Teils Wärmeleitmittel wie Luft oder Wasser aufweist.

10. Elektrischer Gondelantrieb nach einem oder mehreren der vorhergehenden Ansprüche, **dadurch gekennzeichnet, daß** in dem Schaft (16,18) Einrichtungen zur Umwälzung der Schachtluft, z.B. Ventilatoren angeordnet sind.

11. Elektrischer Gondelantrieb nach Anspruch 12, **dadurch gekennzeichnet, daß** die Einrichtungen zur Umwälzung der Schachtluft zur Aufrechterhaltung einer stabilen Zirkulation eingerichtet sind.

12. Elektrischer Gondelantrieb nach einem oder mehreren der vorhergehenden Ansprüche, **dadurch gekennzeichnet, daß** die Antriebsgondel (17,23) Einrichtungen aufweist, die Wärmeübertragungsmittel enthalten (Heat Ducts).

13. Elektrischer Gondelantrieb nach Anspruch 12, **dadurch gekennzeichnet, daß** der Elektromotor (10) eine beidseitig offene Hohlwelle aufweist, die von Seewasser durchströmbar und gegebenenfalls konisch ausgebildet ist.

14. Elektrischer Gondelantrieb nach Anspruch 12, **dadurch gekennzeichnet, daß** in der Welle des Elektromotors (10) ein konvektiver Kühlkreislauf angeordnet ist, der Wärme von der Mitte des Elektromotors zu den Enden transportiert.

15. Elektrischer Gondelantrieb nach Anspruch 12, 13 oder 14, **dadurch gekennzeichnet, daß** der Elektromotor (10) Wickelköpfe (22) mit Heat Ducts, vorzugsweise konvektiv arbeitenden Heat Ducts, zu den kühlen Außenenden, zu Seitenflossen oder in das untere Schaftteil hinein aufweist.

16. Elektrischer Gondelantrieb nach einem oder mehreren der vorhergehenden Ansprüche, **dadurch gekennzeichnet, daß** der Elektromotor (10) Wickelköpfe (22) mit Wärmeableitungsbrücken (21) zur Außenwand der Antriebsgondel aufweist.

17. Elektrischer Gondelantrieb nach Anspruch 16, **dadurch gekennzeichnet, daß** die Wärmeableitungsbrücken (21) aus einem wärmeleitenden Kunststoff bestehen.

18. Elektrischer Gondelantrieb nach Anspruch 17, **dadurch gekennzeichnet, daß** der wärmeleitende Kunststoff zur Verbesserung der Wärmeleitung Füllstoffe aufweist.

19. Elektrischer Gondelantrieb nach einem oder mehreren der vorhergehenden Ansprüche, **dadurch gekennzeichnet, daß** die Antriebsgondel (17,23) und/oder das untere Schaftteil Außenrippen oder Außensicken aufweisen.

20. Elektrischer Gondelantrieb nach einem oder mehreren der vorhergehenden Ansprüche, **dadurch gekennzeichnet, daß** am Übergang vom Schaft zur Antriebsgondel (17,23) wasserdurchströmte Kühlkanäle (15) vorgesehen sind.

21. Elektrischer Gondelantrieb nach einem oder mehreren der vorhergehenden Ansprüche, **dadurch gekennzeichnet, daß** der Motoraußenbereich und/oder der Motor/Schaft-Übergangsbereich zumindest teilweise doppelwandig ausgeführt sind, wobei der Raum zwischen den beiden Wänden von einem Kühlmittel, insbesondere Wasser, durchströmbar ausgebildet ist.

22. Elektrischer Gondelantrieb nach einem oder mehreren der vorhergehenden Ansprüche, **dadurch gekennzeichnet, daß** die Wärmeleiteinrichtungen ebenso wie der Elektromotor (10) wartungsfrei ausgebildet sind.

## Claims

1. Electric propulsion pod for a ship, which pod has an electric motor fitted into a design of propulsion pod which ensures favourable flow of the water around the pod, the propulsion pod being located on the bottom of the ship by means of a hollow access shaft and the heat generated by the electric motor being rejected via the surface of the propulsion pod and also, as a result of the physical structure, to a small degree via the surface of the part of the ship, which adjoins the propulsion pod to the water flowing around it, this being achieved to a very large extent in the design, **characterized in that** the quantity of heat which is rejected via the surface of the pod and of the part of the access shaft which adjoins the propulsion pod is increased by means for improving the heat conduction and heat rejection and by means of an increase in the size of the effective heat rejection area and an increase in the temperature of the effective heat rejection area which is achieved in the design thereof.

2. Electric propulsion pod according to Claim 1, **characterized in that** one means for improving the heat conduction is a material with a higher thermal conductivity than steel.

3. Electric propulsion pod according to Claim 4, **characterized in that** at least the material of the propulsion pod (17, 23) consists of a non-ferrous alloy.

4. Electric propulsion pod according to Claim 2 or 3, **characterized in that** the material is a bronze alloy, in particular of the quality G-Cu Al 10 Ni. 7.

5. Electric propulsion pod according to one or more of the preceding claims, **characterized in that** the propulsion pod (17, 23) has a metallically bright surface.

6. Electric propulsion pod according to one or more of the preceding claims, **characterized in that** the propulsion pod (17, 23) has a reduced wall thickness, in the part directed into the access shaft (16, 18), as compared with the wall thickness present in the part with the favourable flow configuration.

7. Electric propulsion pod according to one or more of the preceding claims, **characterized in that** the propulsion pod (17, 23) has an enlarged surface on the part directed into the access shaft (16, 18), an enlarged surface due to ribs, beads or honeycomb sheet, for example.

8. Electric propulsion pod according to one or more of the preceding claims, **characterized in that** components of the enlarged surface have heat conduction devices (heat ducts) which are in connection with the inside of the electric motor (10).

9. Electric propulsion pod according to one or more of the preceding claims, **characterized in that** the access shaft (16, 18) has a lower part which has, at least in part, a double-walled configuration, the inside of the double-walled part having heat conducting media such as air or water.

10. Electric propulsion pod according to one or more of the preceding claims, **characterized in that** devices, for example fans, are provided in the access shaft (16, 18) for circulating the access shaft air.

11. Electric propulsion pod according to Claim 12, **characterized in that** the devices for circulating the access shaft air are equipped to maintain a stable circulation.

12. Electric propulsion pod according to one or more of the preceding claims, **characterized in that** the propulsion pod (17, 23) has devices which contain heat transfer media (heat ducts).

13. Electric propulsion pod according to Claim 12, **characterized in that** the electric motor (10) has a hollow shaft, which is open at both ends, through which sea water can flow and which has, if required, a conical configuration.

14. Electric propulsion pod according to Claim 12, **characterized in that** a convective cooling circuit is arranged in the shaft of the electric motor (10), which circuit transports heat from the centre of the electric motor to the ends.

15. Electric propulsion pod according to Claim 12, 13 or 14, **characterized in that** the electric motor (10) has coil winding heads (22) with heat ducts, preferably convectively operating heat ducts, to the cool outer ends, to side fins or into the lower part of the access shaft.

16. Electric propulsion pod according to one or more of the preceding claims, **characterized in that** the electric motor (10) has coil winding heads (22) with heat conducting bridges (21) to the outer wall of the propulsion pod.

17. Electric propulsion pod according to Claim 16, **characterized in that** the heat conducting bridges (21) consist of a heat conducting plastic.

18. Electric propulsion pod according to Claim 17, **characterized in that** the heat conducting plastic has filler materials to improve the heat conduction.

19. Electric propulsion pod according to one or more of the preceding claims, **characterized in that** the propulsion pod (17, 23) and/or the lower part of the access shaft has external ribs or external beads.

20. Electric propulsion pod according to one or more of the preceding claims, **characterized in that** cooling ducts (15), through which water flows, are provided at the transition between the access shaft and the propulsion pod (17, 23).

21. Electric propulsion pod according to one or more of the preceding claims, **characterized in that** the external region of the motor and/or the motor/access shaft transition region have an at least partially double-walled configuration, the space between the two walls being configured so that a coolant, in particular water, can flow through it.

22. Electric propulsion pod according to one or more of the preceding claims, **characterized in that** the heat conducting devices, like the electric motor (10), are of maintenance-free design.

## Revendications

1. Système électrique d'entraînement en nacelle pour un navire, muni d'un moteur électrique intimement intégré dans une nacelle d'entraînement cernée par un flux d'eau et présentant un profil propice à l'écoulement, ladite nacelle d'entraînement étant disposée à la face inférieure du navire, par l'intermédiaire d'un arbre creux, et la chaleur engendrée par le moteur électrique, provenant structurellement, pour une très grande part, de la surface de la nacelle d'entraînement et conditionnée physiquement, pour une petite part, par la surface de la partie de l'arbre qui est adjacente à ladite nacelle d'entraînement, étant cédée à l'eau circulant périphériquement, **caractérisé par le fait que** la quantité de chaleur, cédée par l'intermédiaire de la surface de la nacelle et de la partie de l'arbre adjacente à ladite nacelle d'entraînement, est augmentée par des moyens d'amélioration de la conduction et de la transmission thermiques, ainsi que par un accroissement de la surface efficace de transmission thermique et par un accroissement de la température de ladite surface efficace de transmission thermique, obtenu structurellement.

2. Système électrique d'entraînement en nacelle selon la revendication 1, **caractérisé par le fait qu'**un moyen d'amélioration de la conduction thermique est un matériau présentant une conductivité thermique supérieure à celle de l'acier.

3. Système électrique d'entraînement en nacelle selon la revendication 2, **caractérisé par le fait qu'**au moins le matériau de la nacelle d'entraînement (17, 23) consiste en un alliage de métaux non ferreux (NE).

4. Système électrique d'entraînement en nacelle selon la revendication 2 ou 3, **caractérisé par le fait que** le matériau est un alliage de bronze, notamment de la qualité G-Cu Al 10 Ni.

5. Système électrique d'entraînement en nacelle selon l'une ou plusieurs des revendications précédentes, **caractérisé par le fait que** la nacelle d'entraînement (17, 23) présente une surface métalliquement brillante.

6. Système électrique d'entraînement en nacelle selon l'une ou plusieurs des revendications précédentes, **caractérisé par le fait que** la nacelle d'entraînement (17, 23) présente, dans la partie s'engageant dans l'arbre (16, 18), une épaisseur de paroi réduite vis-à-vis de l'épaisseur de paroi située dans la partie de configuration propice à l'écoulement.

7. Système électrique d'entraînement en nacelle selon l'une ou plusieurs des revendications précédentes, **caractérisé par le fait que** la nacelle d'entraînement (17, 23) présente, sur la partie s'engageant dans l'arbre (16, 18), une surface agrandie telle, par exemple, qu'une surface agrandie par des nervures, des moulures ou des tôles en nid d'abeilles.

8. Système électrique d'entraînement en nacelle selon l'une ou plusieurs des revendications précédentes, **caractérisé par le fait que** des éléments constitutifs de la surface agrandie présentent des dispositifs de conduction thermique (conduits de chaleur) en communication avec l'espace interne du moteur électrique (10).

9. Système électrique d'entraînement en nacelle selon l'une ou plusieurs des revendications précédentes, **caractérisé par le fait que** l'arbre (16, 18) comporte une partie inférieure réalisée au moins partiellement à double paroi, l'espace interne de la partie à double paroi renfermant des agents de conduction thermique, tels que de l'air ou de l'eau.

10. Système électrique d'entraînement en nacelle selon l'une ou plusieurs des revendications précédentes, **caractérisé par le fait que** des dispositifs de brassage de l'air de la cavité, par exemple des ventilateurs, sont logés dans l'arbre (16, 18).

11. Système électrique d'entraînement en nacelle selon la revendication 10, **caractérisé par le fait que** les dispositifs de brassage de l'air de la cavité sont conçus pour entretenir une circulation stable.

12. Système électrique d'entraînement en nacelle selon l'une ou plusieurs des revendications précédentes, **caractérisé par le fait que** la nacelle d'entraînement (17, 23) présente des dispositifs qui renferment des moyens de transfert thermique (conduits de chaleur).

13. Système électrique d'entraînement en nacelle selon la revendication 12, **caractérisé par le fait que** le moteur électrique (10) comporte un arbre creux ouvert des deux côtés, qui peut être parcouru par de l'eau de mer et est éventuellement de réalisation conique.

14. Système électrique d'entraînement en nacelle selon la revendication 12, **caractérisé par le fait que** l'arbre du moteur électrique (10) renferme un circuit de refroidissement par convexion, qui transporte de la chaleur depuis le centre dudit moteur électrique jusqu'aux extrémités.

15. Système électrique d'entraînement en nacelle selon la revendication 12, 13 ou 14, **caractérisé par le fait que** le moteur électrique (10) comporte des têtes (22) d'enroulements munies de conduits de chaleur, de préférence des conduits de chaleur fonctionnant par connexion et gagnant les extrémités extérieures refroidies, des ailerons latéraux, ou pénétrant dans la partie inférieure de l'arbre.

16. Système électrique d'entraînement en nacelle selon l'une ou plusieurs des revendications précédentes, **caractérisé par le fait que** le moteur électrique (10) présente des têtes (22) d'enroulements munies de ponts (21) de dissipation thermique vers la paroi extérieure de la nacelle d'entraînement.

17. Système électrique d'entraînement en nacelle selon la revendication 16, **caractérisé par le fait que** les ponts (21) de dissipation thermique consistent en une matière plastique thermiquement conductrice.

18. Système électrique d'entraînement en nacelle selon la revendication 17, **caractérisé par le fait que** la matière plastique thermiquement conductrice comporte des substances de charge, en vue d'améliorer la conduction thermique.

19. Système électrique d'entraînement en nacelle selon l'une ou plusieurs des revendications précédentes, **caractérisé par le fait que** la nacelle d'entraînement (17, 23), et/ou la partie inférieure de l'arbre, présente(nt) des nervures extérieures ou des moulures extérieures.

20. Système électrique d'entraînement en nacelle selon l'une ou plusieurs des revendications précédentes, **caractérisé par le fait que** des canaux de refroidissement (15), parcourus par de l'eau, sont prévus à la transition entre l'arbre et la nacelle d'entraînement (17, 23).

21. Système électrique d'entraînement en nacelle selon l'une ou plusieurs des revendications précédentes, **caractérisé par le fait que** la région extérieure du moteur, et/ou la zone de transition entre le moteur et l'arbre, est (sont) réalisée(s) au moins partiellement à double paroi, l'espace situé entre les deux parois étant conçu pour pouvoir être parcouru par un agent de refroidissement, notamment de l'eau.

22. Système électrique d'entraînement en nacelle selon l'une ou plusieurs des revendications précédentes, **caractérisé par le fait que** les dispositifs de conduction thermique, de même que le moteur électrique (10), sont de réalisation exempte de maintenance.
